# DEMANDE DE BREVET EUROPEEN

(11) **EP 1 806 272 A1**
(43) Date de publication de la demande: **11.07.2007**
(21) Numéro de dépôt: 07100134.1
(22) Date de dépôt: 04.01.2007
(51) Int. Cl.: B62D 25/02

(54) **Dispositif de protection d'une goulotte de remplissage d'un réservoir de carburant d'un véhicule automobile**

(30) Priorité: 10.01.2006 FR 0650092
(71) Demandeur: PEUGEOT CITROËN AUTOMOBILES S.A., 78140 Velizy Villacoublay (FR)
(72) Inventeur: Peru, Marc, Georges, Marcel, 92290 Chatenay-Malabry (FR)

(57) **Abrégé**

L'invention concerne un dispositif de protection (21) pour une goulotte de remplissage (18) d'un réservoir de carburant d'un véhicule automobile, la goulotte (18) étant destinée à être interposée entre une roue du véhicule et une extrémité (9) d'un longeron (8) de la caisse du véhicule située en regard de cette roue.

Selon l'invention, le dispositif (21) comprend un caisson de protection (23) de la partie (19) de la goulotte (18) venant se situer entre l'extrémité (9) du longeron (8) et la roue, ce caisson (23) étant pourvu d'au moins un orifice de passage (22) de la goulotte (18).

L'invention trouve application dans le domaine des véhicules, notamment automobiles.

## Description

L'invention concerne un dispositif de protection pour une goulotte de remplissage d'un réservoir de carburant d'un véhicule automobile, en cas de choc arrière à grande vitesse, la goulotte étant destinée à être interposée entre une roue du véhicule et une extrémité d'un longeron de la caisse du véhicule située en regard de la roue.

Comme visible sur la figure 2, la goulotte de remplissage 1 de ce type de véhicule est usuellement réalisée en un matériau plastique présentant une faible résistance aux impacts ou à l'écrasement et sous la forme d'une tubulure courbe contournant par l'avant la roue adjacente du véhicule 2.

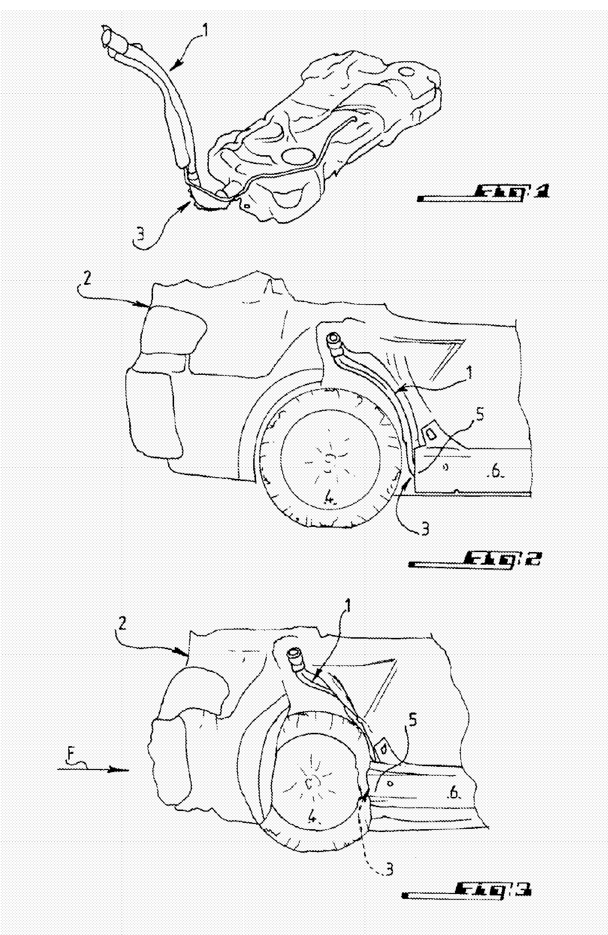

Ainsi, la partie inférieure de la goulotte ou coude 3, mieux visible sur la figure 1, se trouve interposée entre la roue 4 du véhicule et l'extrémité 5 du longeron 6 située en regard de cette roue 4.

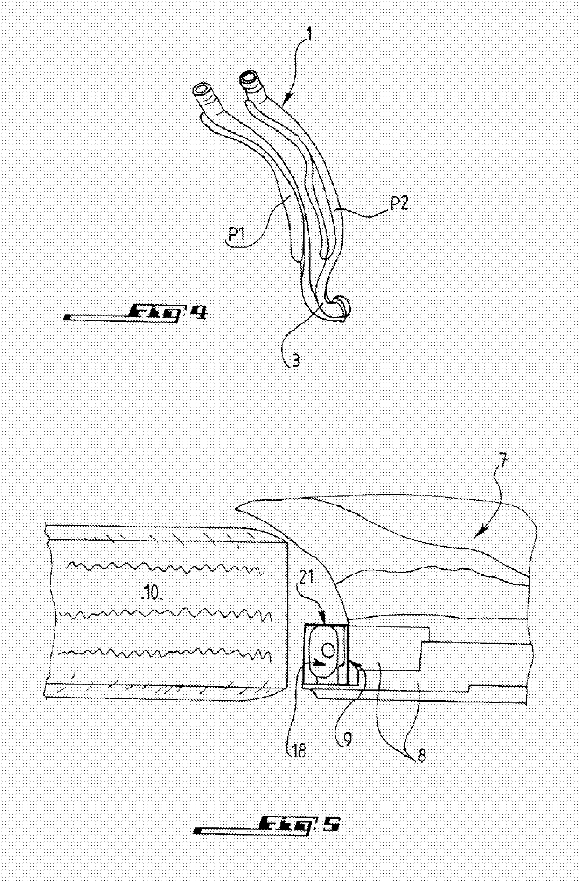

Par conséquent en cas de choc arrière, repéré par F sur la figure 3, la roue 4 pousse la goulotte 1 de la position initiale P1 de la figure 4, à la position finale P2 représentée sur cette même figure, à laquelle le coude 3 de la goulotte 1 se trouve être enserré entre la roue 4 et l'extrémité 5 du longeron 6, jusqu'à être écrasée contre cette extrémité tranchante 5 du longeron 6.

Compte tenu de la moindre résistance du matériau plastique constitutif de la goulotte, celle-ci est détruite par écrasement direct ou par coupure.

La destruction de la goulotte est à l'origine d'un risque de fuite de carburant non négligeable, conduisant à augmenter les risques d'incendie pendant et après le choc et rendant impossible la validation des tests les plus exigeants en matière de sécurité.

L'invention a pour but de résoudre ce problème.

Pour atteindre ce but, l'invention concerne un dispositif de protection pour une goulotte de remplissage d'un réservoir de carburant d'un véhicule automobile, la goulotte étant destinée à être interposée entre une roue du véhicule et une extrémité d'un longeron de la caisse du véhicule située en regard de cette roue.

Selon l'invention, le dispositif comprend un caisson de protection de la partie de la goulotte venant se situer entre l'extrémité du longeron et la roue, ce caisson étant pourvu d'au moins un orifice de passage de la goulotte.

Selon un mode de réalisation possible de l'invention, le caisson de protection est constitué par une pièce rigidement solidarisée à la carrosserie du véhicule.

Selon une autre caractéristique, le caisson est destiné à être rigidement solidarisé à l'extrémité du longeron située en regard de la roue.

Selon encore une autre caractéristique, le caisson est conformé pour s'étendre dans le prolongement de l'extrémité du longeron située en regard de la roue.

Avantageusement, le caisson est un profilé définissant une section en forme générale de C et comprenant deux parois longitudinales opposées reliées entre elles par une paroi centrale, le longeron présentant une section de forme analogue.

De préférence, le dispositif selon l'invention comprend une plaque longitudinale de fermeture du caisson rigidement solidaire d'une plaque de fermeture correspondante du longeron et un couvercle d'obturation du caisson destiné à être situé en regard de la roue, ce couvercle étant rigidement solidarisé aux parois du caisson et à la plaque de fermeture du caisson.

Selon une autre caractéristique, le caisson comprend deux orifices de passage de la goulotte réalisés respectivement dans les deux parois opposées de ce caisson.

Selon une autre possibilité, l'orifice de passage de la goulotte est réalisé dans la paroi centrale du caisson, alors que le dispositif comprend un deuxième orifice de passage de la goulotte, réalisé dans la plaque de fermeture de ce caisson.

Avantageusement, l'orifice de passage de la goulotte est une lumière oblongue débouchant à l'extrémité du caisson.

De préférence, le dispositif selon l'invention est réalisé avec le longeron du véhicule en une seule pièce.

L'invention sera maintenant décrite plus en détail, et en référence aux figures annexées qui en illustrent un mode de réalisation à titre d'exemple non limitatif, parmi lesquelles :
- la figure 1 est une vue en perspective d'un réservoir de carburant et d'une goulotte de remplissage de ce réservoir ;
- la figure 2 est une vue partielle de côté de l'arrière d'un véhicule automobile doté de la goulotte, du réservoir de la figure 1 et d'un longeron connu ;
- la figure 3 est une vue analogue de celle de la figure 2, dans laquelle le véhicule a subi un choc arrière F ;
- la figure 4 est une vue en perspective illustrant les positions P1 et P2 qu'occupe la goulotte de remplissage respectivement à la figure 2 et à la figure 3 ;
- la figure 5 est une vue partielle de dessus de l'arrière d'un véhicule doté d'un dispositif selon l'invention fixé à un longeron du véhicule ;
- la figure 6 est une vue partielle en perspective du longeron de la figure 2 ;
- la figure 7 est une vue partielle en perspective d'une plaque de fermeture du longeron de la figure 5 ;
- la figure 8 est une vue éclatée en perspective d'un caisson de protection et d'un couvercle d'obturation du dispositif de la figure 5, selon un premier mode de réalisation de ce dispositif ;
- la figure 9 est une vue en perspective du longeron de la figure 5 et représentant un chemin de passage de la goulotte au travers du dispositif selon l'invention ;
- la figure 10 est une vue éclatée en perspective du longeron de la figure 5 ;
- la figure 11 est une vue partielle en perspective du véhicule de la figure 5 ayant subi un choc arrière ;
- la figure 12 est une vue agrandie partielle de la zone repérée par XII sur la figure 11 ;
- la figure 13 est une vue partielle en perspective du longeron de la figure 5, pourvu d'un dispositif selon un deuxième mode de réalisation ;
- la figure 14 est une vue en perspective du longeron de la figure 13 et un chemin de passage de la goulotte.

Le véhicule 7 de la figure 5 comprend un longeron 8 de bas de caisse, s'étendant selon une direction parallèle à un plan longitudinal du véhicule en étant doté d'une extrémité 9 située en regard d'une roue 10 du véhicule 7.

Comme représenté sur la figure 6, le longeron 8 est constitué par l'assemblage de deux pièces de tôlerie usuelles, à savoir un renfort interne 11 et une plaque de fermeture longitudinale 12 de ce renfort 11.

Le renfort interne 11 présente une forme générale de profilé à trois parois longitudinales 13, 14, 15 définissant une section sensiblement en forme de C.

Les deux parois opposées 12 et 14 du renfort interne 11 sont chacune prolongées par des pattes de fixation longitudinales 16, 17 qui sont fixées sur la plaque de fermeture 12 du renfort 11.

Dans le véhicule 7 de la figure 5, une goulotte de remplissage 18 permet d'alimenter un réservoir du véhicule en carburant.

Cette goulotte 18 se présente sous la forme d'une tubulure reliant une trappe à carburant à un réservoir de carburant situé selon un plan sensiblement parallèle au plancher du véhicule et au même niveau que le longeron ou en dessous de celui-ci.

Pour atteindre ce réservoir, la goulotte 18 contourne la roue 12 du véhicule par l'avant et passe en arrière de l'extrémité 9 du longeron 8.

En conséquence, une partie 19 de la goulotte 18 se trouve être interposée entre la roue 12 et cette extrémité 9 du longeron 8.

Plus précisément, cette partie interposée 19 de goulotte 18 peut être constituée par une portion inférieure du corps principal de la goulotte ou par son coude.

Or, en cas de choc arrière, la partie interposée 19 de la goulotte 18 est susceptible d'être poussée par la bande de roue 10 contre l'extrémité tranchante 9 du longeron 8 et d'être détruite, ce qui constitue une cause de fuite de carburant et par voie de conséquence, un risque d'incendie non négligeable.

L'invention vise à confiner la partie 19 de la goulotte 18 interposée entre la roue 10 et le longeron 8 dans un ensemble suffisamment rigide qui reste intègre lors du choc, afin d'éviter ce problème.

Selon l'invention, un dispositif de protection 21 de cette partie interposée 19 de la goulotte 18 est prévu entre la roue 10 et l'extrémité 9 du longeron 8, ce dispositif 21 comprenant un caisson de protection 23 doté d'au moins un orifice de passage 22 de la goulotte 18.

Ce dispositif 21 est rigide et permet de protéger la partie interposée 19 de la goulotte 18 en cas de choc arrière, afin d'éviter la destruction de cette goulotte 18 et ainsi les éventuels risques d'incendie pendant et après ce choc.

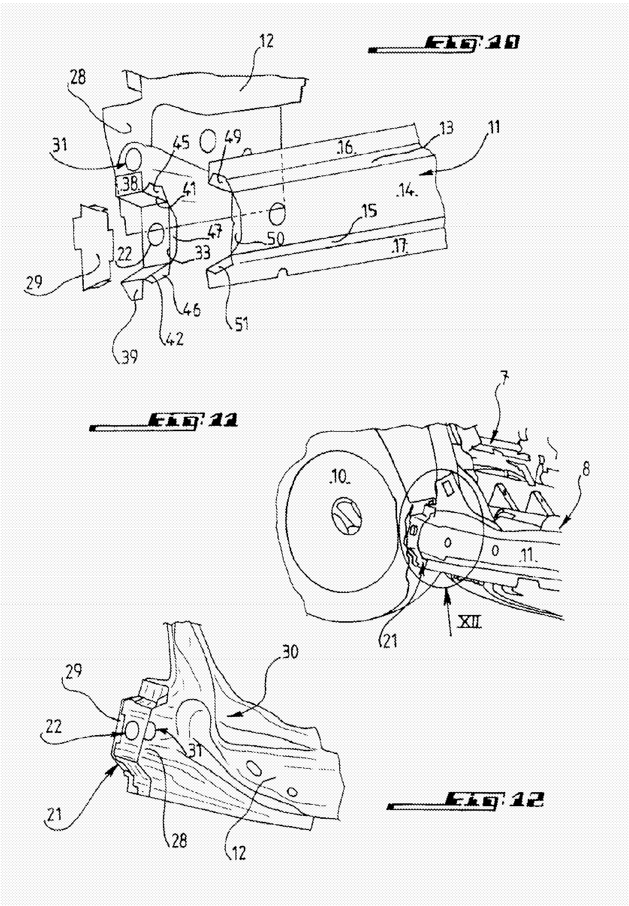

Selon le premier mode réalisation présenté sur les figures 8 à 12, le dispositif est une pièce rapportée au longeron de la figure 6.

Plus précisément, le caisson de protection 23 du dispositif 21 est un profilé destiné à s'étendre dans le prolongement du renfort interne 11 du longeron 8 et coopère avec une plaque de fermeture s'étendant dans le prolongement de la plaque de fermeture 12 du renfort interne 11 pour protéger la goulotte 18.

Ce caisson 23 est doté de trois parois 24-26 définissant une section en forme de C, à savoir une paroi supérieure 24, une paroi inférieure 26 et une paroi centrale 25 reliant la paroi supérieure 24 à la paroi inférieure 25, qui s'étendent respectivement dans le prolongement des trois parois 13-15 du renfort 11 de longeron 8.

La plaque de fermeture 28 de ce caisson 23 est constituée par un prolongement de la plaque de fermeture 12 du longeron 8 qui s'étend depuis l'extrémité 9 du longeron 8 jusqu'à recouvrir la zone de la goulotte 18.

L'orifice de passage 22 de la goulotte 18 est réalisé dans l'épaisseur de la paroi centrale 25 du caisson 23 sous la forme d'un trou sensiblement circulaire, d'un diamètre légèrement supérieur à celui de la goulotte 18.

De plus, la plaque de fermeture 28 du caisson 23 est dotée d'un orifice circulaire de sortie 31 de la goulotte 18, analogue à l'orifice 22 formé sur le caisson 23 et situé en regard de celui-ci.

Ainsi, dans le dispositif de protection 21 illustré sur ces figures 8 à 12, les deux orifices 22, 31 de passage de la goulotte sont situés sur des parois verticales opposées 25, 28 de ce dispositif 1, permettant un passage sensiblement horizontal de la goulotte 18, repéré par A1 sur la figure 9.

Dans ce cas, la goulotte de remplissage 18 contourne le caisson 23 vers l'extérieur du véhicule, pour venir s'insérer par l'orifice d'entrée 22 dans le caisson 23 et sortir de ce caisson 23 par le deuxième orifice de passage 31, en direction du réservoir de carburant, tel que représenté schématiquement sur la figure 9.

Avantageusement, afin de réduire l'encombrement spatial dû à la présence de la goulotte 18 le long de la paroi verticale 25 du dispositif 21, cette paroi verticale 25 est inclinée vers la plaque de fermeture 28 de sorte que son bord libre 32 soit plus proche de cette paroi 25 que ne l'est son bord 33 solidaire du renfort interne 11, comme visible sur la figure 9.

Au contraire, selon un deuxième mode de réalisation des orifices de passage de la goulotte 18, représenté en pointillé sur la figure 8, le caisson 23 comprend deux orifices 22a, 31a s'étendant selon une direction sensiblement verticale A2.

L'orifice d'entrée 22a de la goulotte 18 est réalisé sur la paroi supérieure 24 du caisson 23, le deuxième orifice 31a étant formé sur la paroi inférieure 26 de ce caisson 23.

Dans ce deuxième mode de réalisation de l'invention, la goulotte 18 traverse verticalement le dispositif 21 et son coude est situé en dessous de ce dispositif 21.

Le dispositif 21 comprend en outre un couvercle d'obturation 29 présentant une forme de plaque adaptée pour obstruer l'extrémité arrière de l'ensemble formé par le caisson 23 et sa plaque de fermeture 28 et est ainsi situé en regard de la roue 10 du véhicule 7. La fixation de ce couvercle à l'ensemble « caisson 23 et plaque 28 » est réalisée au moyen de pattes de fixations rigidement solidaires du couvercle 29.

Le caisson 23 comprend en outre des pattes de fixation longitudinales et transversales, assurant sa solidarisation respectivement à sa plaque de fermeture 28 et au renfort interne 11 du longeron 8.

Plus précisément, les deux bords longitudinaux 36, 37 du caisson 23 sont prolongés respectivement par deux pattes longitudinales de fixation 38, 39 appliquée contre la plaque de fermeture 28 et fixée à celle-ci par tout moyen approprié.

De même, les bords transversaux 41, 42 et le bord vertical 33 du caisson 23, situés en regard du renfort interne 8, sont chacun prolongé par une patte de fixation 45-47, fixée à une patte de fixation complémentaire 49-51 prolongeant elle-même la paroi correspondante 13-15 du renfort interne 8.

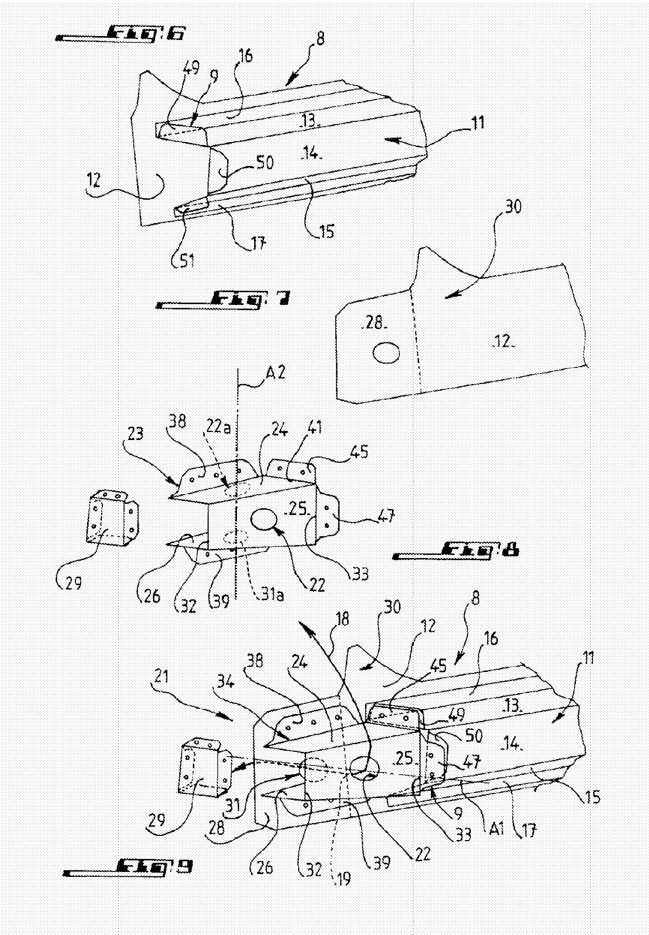

Comme mieux visible sur la figure 7, la plaque de fermeture 28 du caisson 23, et la plaque de fermeture 12 du renfort 11 sont réalisées en une seule pièce 30, nommée ci après plaque de fermeture du longeron.

Afin de réaliser cette unique plaque de fermeture 30 du longeron 8, 28, plus longue que la plaque de fermeture 12 d'un renfort de longeron usuel, un nouvel outil d'emboutissage est nécessaire.

Au contraire, selon un mode de réalisation non représenté, la plaque de fermeture 28 du dispositif 21 est une pièce supplémentaire fixée à la plaque de fermeture 12 d'un renfort 11 de longeron 8 usuel, par exemple par soudage.

D'autre part, afin de mieux assurer la protection de la goulotte 18, il est avantageux que le caisson 23 et la plaque de fermeture 28 de celui-ci soient plus résistants respectivement des deux pièces correspondantes du longeron 8, à savoir le renfort interne 11 et la plaque de fermeture 12 de ce renfort 11.

Pour atteindre cet objectif, il est possible d'augmenter l'épaisseur des parois du caisson 23 et de sa plaque de fermeture 28 par rapport aux épaisseurs du renfort 11 et de sa plaque 12 ou de les réaliser en un matériau plus résistant que le matériau constitutif de ce renfort 11 et de cette plaque 12.

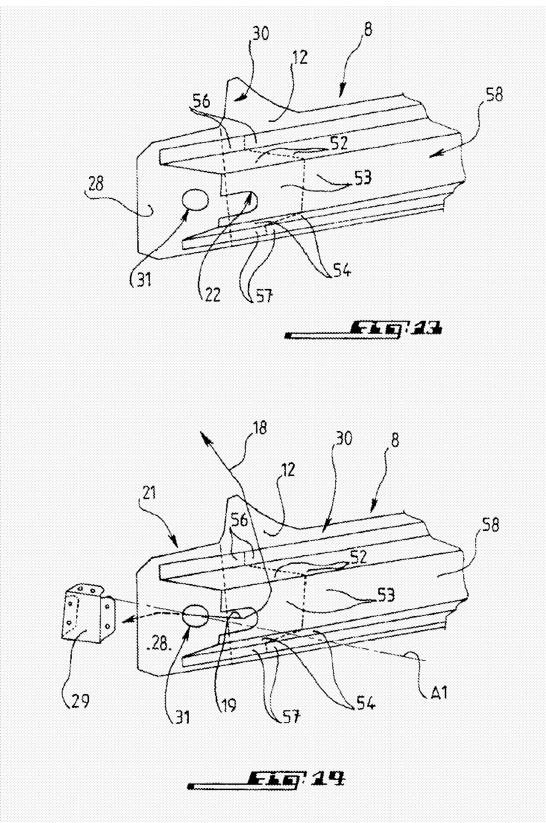

La figure 11 illustre schématiquement le résultat d'une modélisation numérique par maillage de type éléments finis du dispositif des figures 8 à 12 implanté dans un modèle de simulation numérique de choc arrière.

Comme mieux visible sur la figure 12, le dispositif de protection 21 résiste à la poussée de la roue arrière en se déformant peu ou pas et préserve ainsi la goulotte qui reste indemne pendant et après le choc.

Par ailleurs, le dispositif de protection s'avère également favorable au comportement global de la structure du véhicule en fin de choc.

En effet, la présence du dispositif de protection entre le longeron et la roue autorise le passage d'efforts entre la roue arrière et le longeron, accroissant ainsi la raideur globale du véhicule en fin de choc et permettant une meilleure préservation de l'habitacle.

La synoptique d'assemblage du dispositif ci-dessus décrit consiste :
- à souder, par exemple par l'utilisation de points de soudure électrique classique, le couvercle 29 au caisson 23, puis
- à fixer l'ensemble formé par le caisson 23 et son couvercle 29 à l'extrémité arrière 9 du longeron 8 par soudage des pattes transversales 45-47 du caisson aux pattes complémentaires 49-51 du renfort 11,
- à solidariser l'ensemble formé par le caisson 23 et son couvercle 29 à la plaque de fermeture 30, par fixation des pattes longitudinales 38, 39 du caisson 23 et
- à souder le couvercle 29 à la plaque de fermeture 30 en utilisant, si nécessaire, l'orifice d'entrée 22 de la goulotte 18 comme trou de passage d'une pince à souder.

Le dispositif 21 ci-dessus décrit comprend un caisson 23 qui est une pièce rapportée fixée à l'extrémité du longeron 8.

Par conséquent, le dispositif 21 peut être intégré dans un véhicule sans modifier la structure du renfort interne usuel 11 du longeron 8 mais en allongeant seulement la plaque de fermeture 12 de ce renfort 11, de sorte que cette plaque constitue également une plaque de fermeture 28 pour le caisson 23.

Au contraire, dans le deuxième mode de réalisation de l'invention, représenté sur les figures 13 et 14, le dispositif de protection n'est pas une pièce rapportée mais fait partie intégrante du longeron.

Le renfort interne 58 du longeron 8 selon ce deuxième mode de réalisation est différent du renfort de longeron usuel de la figure 6 en ce qu'il inclut le caisson de protection 23, le caisson 23 étant réalisé directement avec le renfort de longeron en une seule et même pièce.

Plus précisément, le longeron 8 comprend un renfort interne 58 plus long que le renfort usuel 11 représenté sur la figure 6, et son extrémité située en regard de la roue 10 forme avec l'extrémité de la plaque de fermeture 30, le dispositif de protection selon l'invention.

Ce renfort interne 58 comprend trois parois longitudinales 52-54 et deux pattes longitudinales de fixation 56, 57 s'étendant tout le long de la plaque de fermeture 30.

Par ailleurs, l'orifice d'entrée 22 de la goulotte est réalisé à l'extrémité de la paroi centrale longitudinale 53 du renfort interne 58, de façon à être situé en regard de l'orifice de sortie 31 de cette goulotte 18, formé dans la plaque de fermeture 30 du dispositif.

Selon un mode de réalisation avantageux de cet orifice d'entrée 22, représenté sur ces mêmes figures 13 et 14, il est réalisé sous la forme d'une lumière oblongue longitudinale débouchant à l'extrémité de la paroi centrale 53 et facilitant l'introduction de la goulotte 18.

La synoptique de réalisation et d'assemblage de ce second mode de réalisation de l'invention consiste :
- à réaliser par exemple par emboutissage un renfort de longeron 58 plus long que celui de la figure 6, et dont l'extrémité située en regard de la roue 10 accueille la partie interposée 19 de la goulotte 18,
- à former l'orifice d'entrée 22 de la goulotte 18 sur la paroi centrale 53 de ce renfort,
- à souder les pattes longitudinales 56, 57 de ce renfort 58 à la plaque de fermeture 30,
- à insérer la goulotte au travers de l'extrémité appropriée du longeron 8 et
- à fixer le couvercle 29 du dispositif de protection 21, comme illustré sur la figure 14.

Le dispositif de protection 21 des figures 8 à 12 comme celui des figures 13 et 14 est constitué par trois pièces de tôlerie constituées par le caisson, sa plaque de fermeture et le couvercle de protection, dont l'assemblage mutuel confèrera la rigidité suffisante au dispositif de protection.

Selon un mode de réalisation différent, non illustré aux figures, le dispositif 21 est constitué par une seule et même pièce massive rapportée et fixée sur la carrosserie, adaptée pour être traversée par la goulotte 18.

Cette pièce peut être un boîtier à section rectangulaire ou trapézoïdale, disposé horizontalement et selon une direction longitudinale du véhicule à l'image du dispositif 21 illustré aux figures, ou horizontalement et selon une direction transversale du véhicule, selon l'espace laissé disponible par l'enveloppe de la roue arrière ou encore verticalement pour enserrer une plus longue portion de la goulotte 18.

Le choix du mode de réalisation du dispositif de protection peut être guidé par des considérations de performances, de coût, de masse ou de facilité d'intégration au sein de longerons existants.

L'invention telle que décrite ci-dessus présente différents avantages parmi lesquels :
- la réduction des risques d'incendie en cas de choc arrière, y compris pour des collisions à haute vitesse,
- la protection de la goulotte de remplissage pendant et après un choc arrière,
- l'accroissement de la raideur globale du véhicule en fin de choc et par conséquent la meilleure préservation de l'habitacle du véhicule,
- la possibilité d'intégrer le dispositif selon l'invention sur des longerons usuels.

## Revendications

1. Dispositif de protection pour une goulotte de remplissage d'un réservoir de carburant d'un véhicule automobile, la goulotte (18) étant destinée à être interposée entre une roue (10) du véhicule et une extrémité (9) d'un longeron (8) de la caisse du véhicule située en regard de cette roue (10), **caractérisé en ce qu'**il comprend un caisson de protection (23) de la partie (19) de la goulotte (18) venant se situer entre l'extrémité (9) du longeron (8) et la roue (10), ce caisson (23) étant pourvu d'au moins un orifice de passage (22) de la goulotte (18).

2. Dispositif selon la revendication 1, dans lequel le caisson de protection (23) est constitué par une pièce rigidement solidarisée à la carrosserie du véhicule.

3. Dispositif selon la revendication 1 ou 2, **caractérisé en ce que** le caisson (23) est destiné à être rigidement solidarisé à l'extrémité (9) du longeron (8) située en regard de la roue (10).

4. Dispositif selon la revendication 3, **caractérisé en ce que** le caisson (23) est conformé pour s'étendre dans le prolongement de l'extrémité (9) du longeron (8) située en regard de la roue (10).

5. Dispositif selon la revendication 4, **caractérisé en ce que** le caisson (23) est un profilé définissant une section en forme générale de C et comprenant deux parois longitudinales opposées (24, 26) reliées entre elles par une paroi centrale (25), le longeron (8) présentant une section de forme analogue.

6. Dispositif selon la revendication 5, **caractérisé en ce qu'**il comprend une plaque longitudinale de fermeture (28) du caisson (23) rigidement solidaire d'une plaque de fermeture correspondante (12) du longeron (8) et un couvercle d'obturation (29) du caisson (23) destiné à être situé en regard de la roue (10), ce couvercle (29) étant rigidement solidarisé aux parois (24-26) du caisson (23) et à la plaque de fermeture (28) du caisson (23).

7. Dispositif selon la revendication 5 ou 6, dans lequel le caisson (23) comprend deux orifices de passage (22, 31) de la goulotte (18) réalisés respectivement dans les deux parois opposées (24, 26) de ce caisson (23).

8. Dispositif selon la revendication 5 ou 6, dans lequel l'orifice de passage (22) de la goulotte est réalisé dans la paroi centrale (25) du caisson (23), et qui comprend un deuxième orifice de passage (31) de la goulotte (18), réalisé dans la plaque de fermeture (28) de ce caisson (23).

9. Dispositif selon l'une des revendications précédentes, dans lequel l'orifice de passage (22, 31) de la goulotte (18) est une lumière oblongue débouchant à l'extrémité du caisson (23).

10. Dispositif selon l'une des revendications 3 à 9, **caractérisé en ce qu'**il est réalisé avec le longeron (8) du véhicule en une seule pièce.
